# EUROPEAN PATENT APPLICATION

(11) **EP 2 230 072 A1**
(43) Date of publication of application: **22.09.2010**
(21) Application number: 09155776.9
(22) Date of filing: 20.03.2009
(51) Int. Cl.: B29D 30/54, B26D 1/00, B29B 17/02

(54) **Tyre retreading method and system**

(71) Applicant: Bridgestone Corporation, Tokyo 104-8340 (JP)
(72) Inventor: Basile, Alessandro, 00040 Pomezia (IT); Cotroni, Stefano, 00126 Roma (IT)
(74) Representative: Jorio, Paolo

(57) **Abstract**

A method and system (1) for retreading a tyre (2), whereby a lateral surface (7) of the casing (6) is buffed; an inner surface (17) of a tread strip (10) is buffed; a green-rubber cushion (9) and the tread strip (10) are wound about the lateral surface (7) of the casing (6) to assemble the tyre (2); and the tyre (2) is cured; buffing of the lateral surface (7) of the casing (6) and/or the inner surface (17) of the tread strip (10) includes : directing a laser beam (B) onto the lateral surface (7) of the casing (6) and/or the inner surface (17) of the tread strip (10) to sublimate part of the existing rubber; and producing a relative movement between the laser beam (B) and the lateral surface (7) of the casing (6) and/or the inner surface (17) of the tread strip (10), so the laser beam (B) sweeps over the whole surface (7; 17).

## Description

### TECHNICAL FIELD

The present invention relates to a tyre retreading method and system.

The present invention may be used to advantage in retreading truck tyres, to which the following description refers purely by way of example.

### BACKGROUND ART

Retreading a truck tyre comprises removing the worn tread from the tyre to expose the tyre casing, and applying a new tread to the casing. To apply the new tread to the casing, a green-rubber intermediate strip or cushion and a tread strip are wound about the casing; and the casing is cured further in an autoclave, so the bonding action of the cushion grips the tread firmly to the casing.

Examples of tyre retreading systems are to be found in Patent US6368439B1 and Patent Application US2005194077A1.

To remove all traces of the worn tread from the casing (without damaging the belts underneath), mechanical buffing, normally using wire brushes, is employed. This serves both to eliminate the worn tread and to improve grip by roughening the lateral surface of the casing and so increasing its specific surface area. Also, before applying the tread strip about the green-rubber cushion, an inner surface of the tread strip is buffed mechanically, normally using wire brushes, to remove any extraneous substances (dust, dirt and similar) from the inner surface, and to improve grip by roughening the inner surface and so increasing its specific surface area.

Mechanical wire brush buffing, however, has various drawbacks. First and foremost, it mechanically removes small particles of rubber that form rubber dust, which must be removed using special extractors to avoid contaminating the workplace, endangering health, and fouling both the tyre and machinery.

Moreover, by its very nature, mechanical buffing does not permit accurate, constant adjustment of the amount of rubber removed, or even very uniform rubber removal, with the result that, very often, either some of the worn tread is left on, or the underlying belts are damaged. For the same reason, mechanical buffing fails to provide for an even casing or tread strip, thus resulting in humps or dips in the retreaded tyre, which result in annoying vertical vibrations as the tyre rolls along.

When mechanical wire brush buffing, pieces of wire may work loose from the brushes and become embedded in the lateral surface of the casing or the inner surface of the tread strip, thus locally impairing grip of the tread strip to the casing, and reducing performance of the retreaded tyre.

Mechanical wire brush buffing produces a rough surface with an uneven, purely random score pattern, as opposed to a predetermined desired pattern.

Finally, the wire brushes are subject to severe wear and must be changed frequently, thus resulting in frequent maintenance holdups of the retreading system.

### DISCLOSURE OF THE INVENTION

It is an object of the present invention to provide a tyre retreading method and system designed to eliminate the above drawbacks, and which in particular are cheap and easy to implement.

According to the present invention, there are provided a tyre retreading method and system, as claimed in the accompanying Claims.

### BRIEF DESCRIPTION OF THE DRAWINGS

A non-limiting embodiment of the present invention will be described by way of example with reference to the accompanying drawings, in which:
Figure 1 shows a schematic of a tyre retreading system in accordance with the present invention;
Figure 2 shows a schematic view in perspective, with parts removed for clarity, of a building machine of the Figure 1 retreading system;
Figure 3 shows a schematic front view, with parts removed for clarity, of a first buffing device of the Figure 1 retreading system;
Figure 4 shows a schematic front view, with parts removed for clarity, of a second buffing device of the Figure 1 retreading system.

### PREFERRED EMBODIMENTS OF THE INVENTION

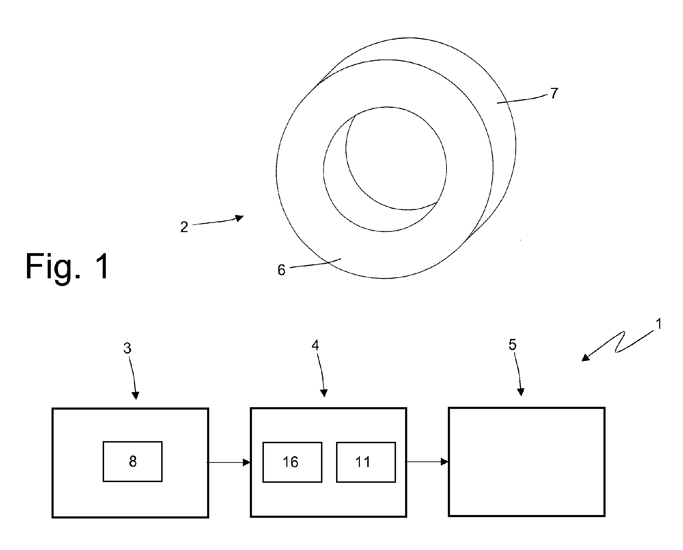

Number 1 in Figure 1 indicates as a whole a retreading system for retreading a worn truck tyre 2, and which comprises a preparation station 3, a winding station 4, and a curing station 5.

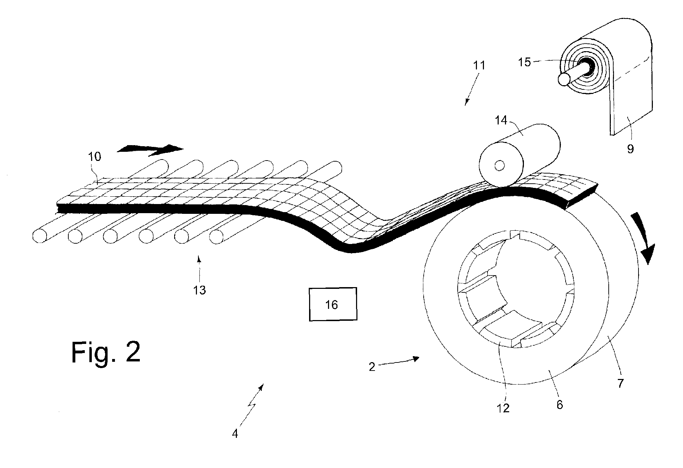

At preparation station 3, the worn tread (not shown) is removed mechanically from tyre 2, by cutters or similar, to expose the casing 6 of tyre 2, i.e. what is left of tyre 2 when the tread is removed. The lateral surface 7 (Figure 2) of casing 6 is then buffed to remove all traces of the old tread (without damaging the belts underneath) and increase the specific surface area and hence grip. To buff lateral surface 7 (Figure 2) of casing 6, preparation station 3 comprises a buffing device 8 described in detail below.

The buffed lateral surface 7 of casing 6 is then skived by hand to remove any preexisting local damage, and, finally, is filled by hand to fill any holes in lateral surface 7 of casing 6 with green rubber.

Once filling is completed, casing 6 is transferred to winding station 4 where a green-rubber intermediate strip or cushion 9 and a tread strip 10 are wound about casing 6.

As shown in Figure 2, winding station 4 comprises a building machine 11, in turn comprising a rotary drum 12 supporting casing 2 of tyre 2; a feed conveyor 13 for feeding tread strip 10 to rotary drum 12; a pressure roller 14 positioned contacting tread strip 10 between drum 12 and feed conveyor 13; and an actuating device (not shown) for pushing pressure roller 14 against tread strip 10 with adjustable force. Building machine 11 may also comprise a support 15 for supporting in rotary manner a roll of green-rubber cushion 9, which is wound manually about casing 6. In other words, feed conveyor 13 and support 15 define winding means for winding green-rubber cushion 9 about casing 6, and winding tread strip 10 about casing 6 and on top of green-rubber cushion 9.

Winding station 4 also comprises a buffing device 16, which is located upstream from feed conveyor 13, downstream from feed conveyor 13 (as shown in Figure 2), or inside feed conveyor 13, and which serves to buff an inner surface 17 of tread strip 10 to remove any extraneous substances (dust, dirt and similar) from inner surface 17, and to improve grip by roughening inner surface 17 and so increasing its specific surface area.

In a different embodiment not shown but no less important, as opposed to forming part of winding station 4, buffing device 16 for buffing inner surface 17 of tread strip 10 is located at a work station where tread strip 10 is formed (and which may even be completely separate and independent of retreading system 1); in which case, inner surface 17 of tread strip 10 is buffed simultaneously with the manufacture of tread strip 10, and may therefore be buffed days or weeks before winding tread strip 10 about casing 6.

In actual use, at winding station 4, casing 6 of tyre 2 is mounted on drum 12, which is then rotated to wind green-rubber cushion 9 and tread strip 10 about casing 6.

In a preferred embodiment, building machine 11 is operated to wind green-rubber cushion 9 manually about casing 6, independently of tread strip 10, and then to wind tread strip 10 separately about casing 6 and on top of the previously wound green-rubber cushion 9. In which case, buffing device 16 buffs inner surface 17 of tread strip 10 before tread strip 10 is wound about casing 6 and on top of the previously wound green-rubber cushion 9.

In an alternative, lesser used embodiment, green-rubber cushion 9 is superimposed on tread strip 10 by means of two known mutually cooperating pressure rollers (not shown) off building machine 11, and green-rubber cushion 9 and tread strip 10 are then wound together about casing 6 using building machine 11. In which case, buffing device 16 buffs inner surface 17 of tread strip 10 before green-rubber cushion 9 is coupled to tread strip 10.

Winding green-rubber cushion 9 and tread strip 10 about casing 6 forms a retreaded tyre 2, which must be cured for use. So, after winding on green-rubber cushion 9 and tread strip 10, the retreaded tyre 2 is transferred to curing station 5 (shown schematically in Figure 1) where the retreaded tyre 2 undergoes a curing process. This may be a cold curing process, in which the retreaded tyre 2 is cured for a short time in an autoclave; or a hot curing process, in which the retreaded tyre 2 is cured for a long time in a press-sealed curing mold. When dealing with a premolded, cured tread strip (so-called PCT - Pre-Cured Tread), cold curing is adopted, in that only the green-rubber cushion 9 need be cured to ensure firm grip of tread strip 10 to casing 6 of tyre 2 by virtue of the bonding action of cushion 9. When using a green-rubber tread strip 10, on the other hand, hot curing is required to cure both cushion 9 and tread strip 10.

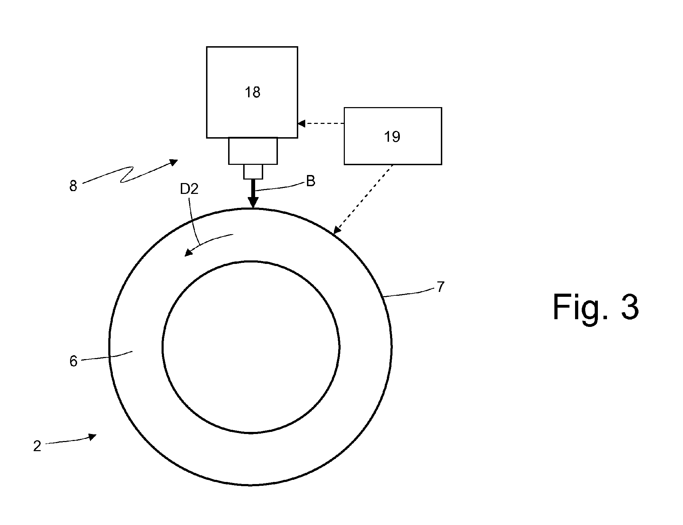

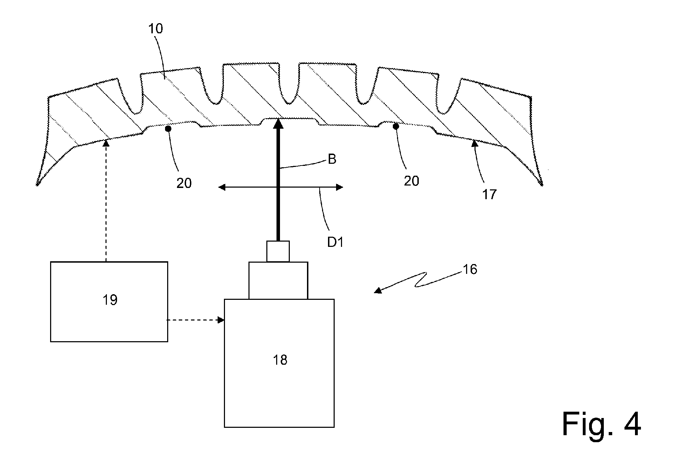

As shown in Figures 3 and 4, each buffing device 8, 16 comprises an emitter 18 for emitting a laser beam B powerful enough to sublimate rubber. A high-power CO₂ laser with a high rubber sublimation rate is normally used. When buffing lateral surface 7 of casing 6 or inner surface 17 of tread strip 10, a high-power (e.g. CO₂) laser with a high rubber sublimation rate is particularly essential, on account of the thick layer of rubber (about one or more millimetres) to be removed from lateral surface 7 of casing 6 or inner surface 17 of tread strip 10.

Each buffing device 8, 16 also comprises an electronically controlled deflecting device 19 connected to emitter 18 to change the emission direction of laser beam B, and which typically only changes the emission direction of laser beam B in a deflection direction D1 (Figure 4) perpendicular to the longitudinal travelling direction D2 (Figure 3) of lateral surface 7 of casing 6 or inner surface 17 of tread strip 10. The whole of lateral surface 7 of casing 6 or inner surface 17 of tread strip 10 is therefore swept by the laser beam using both the deflection of laser beam B in deflection direction D1, and the movement of lateral surface 7 of casing 6 and inner surface 17 of tread strip 10 in travelling direction D2.

To sublimate a given mass of rubber (i.e. convert it directly from a solid to a gaseous state), it must be subjected to a given constant amount of energy depending on the latent sublimation heat of the rubber. The amount of energy supplied to a given point on lateral surface 7 of casing 6 or inner surface 17 of tread strip 10 can be regulated by simply adjusting (increasing or reducing) the length of time the point is exposed to laser beam B and/or by adjusting the power of laser beam B. Therefore, by adjusting the exposure time to laser beam B from one point to another and/or adjusting the power of laser beam B, the amount of rubber sublimated (i.e. the etching depth of laser beam B) can be adjusted accurately from one point to another.

In actual use, casing 6 is rotated or tread strip 10 fed past respective emitter 18 to allow laser beam B from emitter 18 to sublimate the rubber surface layer (and any other extraneous substances) on lateral surface 7 of casing 6 and inner surface 17 of tread strip 10. This process of removal by sublimating the rubber surface layer provides for both even removal, to obtain a smooth finish surface, as well as differential removal, to obtain an uneven finish surface with a predetermined pattern, which may be either two-dimensional (i.e. with grooves of constant depth) or three-dimensional (i.e. with grooves of varying depth).

Figure 4 shows tread strip 10 partly buffed by buffing device 16. As can be seen, the buffing pattern is designed to form on inner surface 17 of tread strip 10 a number of parallel longitudinal grooves 20 of considerable depth (at least 0.5 mm and preferably about 0.8 mm, as compared with a standard depth of about 0.2 mm). This depth is made possible using laser beam B, which provides for in-depth rubber removal, whereas conventional mechanical brushes at most succeed in removing only 0.2-0.26 mm. Tests surprisingly show that a substantial increase in the depth of longitudinal grooves 20 (to over 0.5 mm) provides for greatly improving grip of tread strip 10 to green-rubber cushion 9 and so improving performance of retreaded tyre 2. As stated, grooves 20 serve to improve grip of tread strip 10 to casing 6 (with cushion 9 in between); and this is achieved both by increasing the specific surface area of inner surface 17 of tread strip 10 (and therefore the contact area where the bonds between casing 6 and tread strip 10 are formed with cushion 9 in between), and by producing "mutual penetration" of casing 6 and tread strip 10, with cushion 9 in between, to form a mechanical joint.

In a further embodiment, longitudinal grooves 20 are formed on tread strip 10 when manufacturing tread strip 10, by appropriately shaping the tread strip 10 extruder outlet and/or curing mold. In which case, longitudinal grooves 20 already being formed on inner surface 17, buffing by device 16 serves solely to surface clean inner surface 17 of tread strip 10; and emitter 18 of buffing device 16, as opposed to featuring a high-power CO₂ laser with a high rubber sublimation rate, may be equipped with a low-power, e.g. excimer, laser with a low rubber sublimation rate, to simply remove a thin film of rubber (of a few microns or few tens of microns) from inner surface 17 of tread strip 10.

In the embodiment described above, both buffing devices 8, 16 employ a rubber-removing laser beam B. In other variations not shown, only one of buffing devices 8, 16 employs a rubber-removing laser beam B, while the other is a traditional type employing wire brushes.

Using a rubber-removing laser beam B, the rubber (and obviously any other extraneous substances), as opposed to being removed mechanically, is sublimated (i.e. passes directly from the solid to the gaseous state), so buffing devices 8, 16 described produce no rubber dust, but only vapour and fumes, which obviously tend to rise and can be aspirated completely and easily by extractors (unlike rubber dust which tends to be expelled in all directions, settles by force of gravity, and is much more difficult to extract). What is more, the vapour and fumes produced by buffing devices 8, 16 in no way foul casing 6 of tyre 2, tread strip 10, or the machinery.

Moreover, laser rubber removal permits highly accurate, constant control of the thickness removed, as well as extremely even rubber removal. This is due to the fact that, to sublimate a given mass of rubber, it must be subjected to a given constant energy depending on the latent sublimation heat of the rubber; so, by controlling the power of laser beam B and the exposure time to laser beam B of a given area, it is possible to accurately control the energy to which a given area is subjected and hence the amount of rubber removed by sublimation, and the worn tread can be removed completely, with no damage to the underlying belts. Moreover, unlike mechanical buffing, which also damages the underlying tread belts, laser beam B, which sublimates the rubber, cannot damage the tread belts (at least within the relatively short exposure time to sublimate the rubber).

Not being subject to wear or material castoff during use, buffing devices 8, 16 in no way contaminate casing 6 of tyre 2 or tread strip 10, and need no maintenance (unless at extremely long intervals that have no real negative impact on the output of retreading system 1).

Tests show that buffing devices 8, 16 described provide for reducing buffing time and so increasing the output of retreading system 1.

Last but not least, laser beam B of buffing devices 8, 16 provides for etching lateral surface 7 of casing 6 and inner surface 17 of tread strip 10 extremely accurately (to an error of less than 0.01 mm) with any predetermined pattern, either two-dimensional (i.e. with grooves of constant depth) or three-dimensional (i.e. with grooves of varying depth). The pattern etched on inner surface 17 of tread strip 10 is designed to maximize grip, bearing in mind also that neither casing 6 of tyre 2 nor tread strip 10 is completely even (due to the presence, for example, of plies and splices in casing 6, and grooves in the tread pattern of tread strip 10).

It is important to note that the pattern etched on inner surface 17 of tread strip 10 can be altered rapidly, if necessary from one tread strip 10 to another, by simply software altering electronic control of deflecting device 19. Using conventional wire brushes, on the other hand, changing buffing performance takes much longer, and is much more complicated, by involving replacement of physical parts.

Buffing of lateral surface 7 of casing 6 can also be adapted easily to each casing 6 as a function of the actual condition of lateral surface 7. That is, whereas tread strip 10 is a new, specially made component, which means inner surface 17 of tread strip 10 is in a fairly homogeneous condition, casing 6 of tyre 2 is a used part that has had a working life, is being recycled, and has undergone mechanical removal of the worn tread. Given therefore the highly heterogeneous condition of lateral surface 7 of casing 6, adapting buffing performance as closely as possible to the actual condition of lateral surface 7 of casing 6 may prove useful, and can be done by simply, quickly, and accurately adjusting the direction and power of laser beam B, and the exposure time to laser beam B of each point.

## Claims

1. A method of retreading a tyre (2); the method comprising the steps of:
buffing a lateral surface (7) of a casing (6) of the tyre (2);
buffing an inner surface (17) of a tread strip (10);
winding a green-rubber cushion (9) and the tread strip (10) about the lateral surface (7) of the casing (6) to assemble the tyre (2); and
curing the tyre (2);
the method being **characterized in that** the step of buffing the lateral surface (7) of the casing (6) and/or the inner surface (17) of the tread strip (10) comprises the further steps of:
directing a laser beam (B) onto the lateral surface (7) of the casing (6) and/or the inner surface (17) of the tread strip (10) to sublimate part of the existing rubber; and
producing a relative movement between the laser beam (B) and the lateral surface (7) of the casing (6) and/or the inner surface (17) of the tread strip (10), so the laser beam (B) sweeps over the whole surface (7; 17).

2. A method as claimed in Claim 1, wherein the step of producing a relative movement between the laser beam (B) and the lateral surface (7) of the casing (6) and/or the inner surface (17) of the tread strip (10) comprises the further steps of:
varying the emission direction of the laser beam (B) solely in a deflection direction (D1); and
moving the lateral surface (7) of the casing (6) and/or the inner surface (17) of the tread strip (10) in a longitudinal travelling direction (D2) perpendicular to the deflection direction (D1).

3. A method as claimed in Claim 1 or 2, and comprising the further step of varying the energy supplied to a given point on the lateral surface (7) of the casing (6) or the inner surface (17) of the tread strip (10) by varying the length of time the point is exposed to the laser beam (B) and/or by varying the power of the laser beam (B), so as to vary the amount of rubber sublimated at the point.

4. A method as claimed in Claim 1, 2 or 3, and comprising the further steps of:
determining beforehand a desired etching pattern to be formed on the lateral surface (7) of the casing (6) and/or the inner surface (17) of the tread strip (10); and
forming the desired etching pattern on the lateral surface (7) of the casing (6) and/or the inner surface (17) of the tread strip (10) by means of the laser beam (B) and while buffing the surface (7; 17).

5. A method as claimed in one of Claims 1 to 4, wherein the inner surface (17) of the tread strip (10) is buffed simultaneously with formation of the tread strip (10).

6. A method as claimed in one of Claims 1 to 4, wherein the inner surface (17) of the tread strip (10) is buffed just before winding the green-rubber cushion (9) and the tread strip (10) about the lateral surface (7) of the casing (6).

7. A method as claimed in Claim 6, and comprising the further steps of:
winding the green-rubber cushion (9) about the casing (6) before the tread strip (10) and independently of the tread strip (10); and
buffing the inner surface (17) of the tread strip (10) just before winding the tread strip (10) about the casing (6) and on top of the previously wound green-rubber cushion (9).

8. A method as claimed in Claim 6, and comprising the further steps of:
applying the green-rubber cushion (9) to the tread strip (10), and then winding the green-rubber cushion (9) and the tread strip (10) together about the tyre (2); and
buffing the inner surface (17) of the tread strip (10) just before applying the green-rubber cushion (9) to the tread strip (10).

9. A method as claimed in one of Claims 1 to 8, wherein the step of buffing the inner surface (17) of the tread strip (10) comprises forming a number of parallel longitudinal grooves (20) of at least 0.5 mm in depth.

10. A method as claimed in one of Claims 1 to 8, and comprising the further step of forming a number of longitudinal grooves (20) beforehand on the inner surface (17) of the tread strip (10) when building the tread strip (10); the step of buffing the inner surface (17) of the tread strip (10) comprising removing a surface film from the inner surface (17) to clean the inner surface (17).

11. A method as claimed in one of Claims 1 to 10, and comprising the further step of removing the worn tread from the used tyre (2) to obtain the casing (6) of the tyre (2).

12. A system (1) for retreading a tyre (2); the system comprising:
a first buffing device (8) for buffing a lateral surface (7) of a casing (6) of the tyre (2);
a second buffing device (16) for buffing an inner surface (17) of a tread strip (10);
a winding station (4) for winding a green-rubber cushion (9) and the tread strip (10) about the lateral surface (7) of the casing (6) to assemble the tyre (2)); and
a curing station (5) for curing the tyre (2);
the system (1) being **characterized in that** the first buffing device (8) and/or the second buffing device (16) comprise/s :
an emitter (18) for directing a laser beam (B) onto the lateral surface (7) of the casing (6) and/or the inner surface (17) of the tread strip (10) to sublimate part of the existing rubber; and
displacing means (13, 19) for producing a relative movement between the laser beam (B) and the lateral surface (7) of the casing (6) and/or the inner surface (17) of the tread strip (10), so the laser beam (B) sweeps over the whole surface (7; 17).
